Europäisches Patentamt

European Patent Office

Office européen des brevets

(19)

(11) Veröffentlichungsnummer: **0 163 235**

**A2**

(12) **EUROPÄISCHE PATENTANMELDUNG**

(21) Anmeldenummer: 85106185.3

(22) Anmeldetag: 21.05.85

(51) Int. Cl.⁴: **H 04 N 5/63**

(30) Priorität: 30.05.84 DE 3420196

(43) Veröffentlichungstag der Anmeldung:
04.12.85 Patentblatt 85/49

(84) Benannte Vertragsstaaten:
AT BE CH DE FR GB IT LI NL SE

(71) Anmelder: Standard Elektrik Lorenz Aktiengesellschaft
·Lorenzstrasse 10
D-7000 Stuttgart 40(DE)

(72) Erfinder: Reh, Klaus
Panoramastrasse 18
D-7321 Albershausen(DE)

(72) Erfinder: Schultz, Jürgen
Schauinsland 39
D-7307 Aichwald(DE)

(74) Vertreter: Pohl, Heribert, Dipl.-Ing et al,
Standard Elektrik Lorenz AG Patent- und Lizenzwesen
Kurze Strasse 8 Postfach 300 929
D-7000 Stuttgart 30(DE)

(54) Schaltnetzteil.

(57) Die Erfindung bezieht sich auf ein Schaltnetzteil für ein Bildwiedergabegerät mit einer Bildröhre, bei dem die Betriebsspannung ($U_B$) in Reihe mit einem elektronischen Schalter (S) mit einer antiparallel geschalteten Freilaufdiode (D) und der Primärwicklung (4) des Transformators (3) liegt. Die Primärwicklung (4) ist durch einen Kondensator (CA) zu einem Schwingkreis ergänzt. Der Schalter (S) wird von einer Steuer- und Regelschaltung (5) periodisch betätigt. Mit einer Diodensplitwicklung (8) wird eine Hochspannung ($U_{Hoch}$) und eine Focusspannung ($U_F$) für die Bildröhre erzeugt. Eine weitere Sekundärwicklung (8) mit Anzapfungen (a bis g) ist mit Einweggleichrichterschaltungen (Da bis Dg, Ca bis Cg) beschaltet und liefert sämtliche benötigten Sekundärspannungen des Bilwiedergabegerätes.

Fig.1

EP 0 163 235 A2

K. Reh - J. P. Schultz 15-2

## Schaltnetzteil

Die Erfindung bezieht sich auf ein Schaltnetzteil für ein Bildwiedergabegerät mit einer Bildröhre gemäß dem Oberbegriff des Anspruches 1.

Aus der DE-OS 31 07 009 ist ein derartiges Schaltnetzteil für ein Fernsehempfangsgerät bekannt. Dieses Schaltnetzteil arbeitet als Sperrwandler mit einer Gegentaktendstufe, die mit einer festen Frequenz zwischen 50 und 300 KHz geschaltet wird. Dabei kann die Frequenz zum Schalten der Gegentaktendstufe mit der Frequenz der Zeilenablenkung verkoppelt sein und beispielsweise ein ganzzahliges Vielfaches der Zeilenfrequenz betragen. Es lassen sich alle Betriebsphasen des Sperrwandlers sekundärseitig zur Erzeugung von Betriebsspannungen, einschließlich der Hochspannung für die Bildröhre, durch Zweiweggleichrichter bzw. Spannungsverdoppler belasten.

Der Erfindung liegt die Aufgabe zugrunde, ein einfaches nichtsynchronisiertes Schaltnetzteil zur Erzeugung aller benötigten Spannungen anzugeben.

Die Lösung dieser Aufgabe erfolgt mit den im Anspruch 1 angegebenen Mitteln. Vorteilhafte Ausgestaltungen sind in den Unteransprüchen 2 bis 5 enthalten.

K. Reh - J. P. Schultz 15-2

Die Erfindung wird nun anhand des in den Figuren dargestellten Ausführungsbeispiels näher erläutert. Es zeigen:

Fig. 1        das Schaltbild des Schaltnetzteils und

Fig. 2 a,b    Diagramme von im Schaltnetzteil auftretenden
              Spannungen und Strömen.

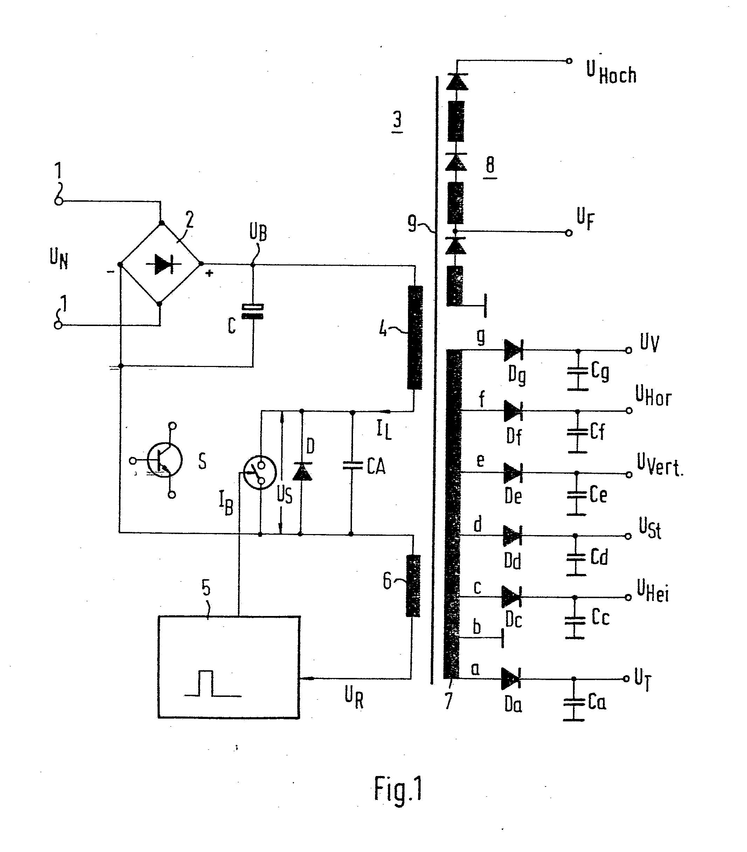

Das in Fig. 1 gezeigte Schaltbild des Schaltnetzteils ist
eine schematische Darstellung, bei der alle nicht zur
eigentlichen Funktion gehörenden Bauteile der besseren
Übersicht wegen weggelassen wurden.

Das Schaltnetzteil weist Eingangsklemmen 1 auf, an denen
die übliche Netzwechselspannung $U_N$ angelegt wird. An die
Eingangsklemmen 1 ist ein Gleichrichter 2, bespielsweise
ein Brückengleichrichter, angeschlossen, an den ein Kondensator C angeschaltet ist. Der Kondensator C ist
üblicherweise ein Elektrolytkondensator und er wird von
der vom Gleichrichter 2 abgegebenen Spannung auf die
Betriebsspannung $U_B$ aufgeladen. Dabei weisen der Gleichrichter 2 und der Kondensator C die in Figur 1 angegebene
Polung auf. Im Schaltnetzteil ist ein Transformator 3
vorhanden, dessen Primärwicklung 4 mit ihrem einen Anschluß mit der die positive Betriebsspannung $U_B$ führenden
Seite des Kondensators C und mit ihrem anderen Anschluß
mit dem elektronischen Schalter S verbunden ist. Der
andere Anschluß des Schalters S ist mit dem die negative
Betriebsspannung fünrenden Anschluß des Kondensators C
verbunden. Zum Schalters S parallel ist eine Freilaufdiode D vorhanden, deren Kathode mit der Primärwicklung 4
verbunden ist.

K. Reh - J. P. Schultz 15-2

Weiterhin liegt zum Schalter S der Kondensator CA parallel. Eine Steuer- und Regelschaltung 5 wirkt auf den Schalter S ein und betätigt ihn mit einer Frequenz, die etwa bei 40 KHz liegt. Die Steuer- und Regelschaltung 5 erhält von einer weiteren Wicklung 6 des Transformators 3 eine Spannung $U_R$, entsprechend der sie die Schaltfrequenz des Schalters S bei schwankender Betriebsspannung $U_B$ und/oder wechselnder Last verändert. Das heißt, bei sinkender Spannung aufgrund kleiner werdender Betriebsspannung $U_B$ und steigender Last wird die Frequenz der Steuerimpulse für den Schalter S erniedrigt. Bei steigender Spannung aufgrund einer sich erhöhenden Betriebsspannung und/oder geringer werdender Last wird die Frequenz der Steuerimpulse für den Schalter S erhöht.

Der Transformator 3 weist eine Sekundärwicklung 7 mit einer Anzahl von Anzapfungen a bis g auf. Die Anzapfung b ist mit dem Massepotential verbunden. An die Anzapfungen a und c bis g ist jeweils eine Gleichrichterschaltung aus einer Diode und einem Kondensator angeschlossen. Die Dioden und die Kondensatoren sind mit den Bezugszeichen D bzw. C und einem Index entsprechend der Bezeichnung der Anzapfung versehen. Die Gleichrichterschaltungen weisen jeweils eine Ausgangsklemme auf, an denen die für das nicht dargestellte Bildwiedergabegerät mit ihrer Bildröhre erforderlichen Spannungen abgenommen werden können. Diese Spannungen sind bespielsweise folgende (von unten nach oben):

$U_T$ für die Tonstufen,
$U_{Hei}$ für die Heizung der Bildröhre,

ZT/P2-Wr/Az          16.05.84                    -/-

K. Reh - J. P. Schultz 15-2

$U_{St}$ für diejenigen Stufen, die eine von einer nicht gezeigten Regelschaltung stabilisierte Spannung benötigen,

$U_{Vert}$ für die vertikale Ablenkschaltung,

$U_{Hor}$ für die horizontale Ablenkschaltung,

$U_V$ für die Videostufen.

Auf dem Transformator 3 ist eine weitere Sekundärwicklung 8 vorhanden, die als Diodensplitwicklung ausgeführt ist. Ein Anschluß der Diodensplitwicklung ist mit dem Massepotential verbunden und an dem anderen Anschluß kann die Hochspannung $U_{Hoch}$ für die Bildröhre abgenommen werden. Die Diodensplitwicklung weist eine Anzapfung auf, an der die Focusspannung $U_F$ für die Bildröhre ansteht.

Bei dieser Ausgestaltung des Schaltnetzteiles ist die Gewinnung der Hochspannung $U_{Hoch}$ unabhängig von der horizontalen Ablenkschaltung, so daß die Ablenkschaltung für beliebige und auch umschaltbare Zeilenfrequenzen ausgelegt werden kann.

Der Transformator 3 hat einen Ferritkern 9 und die Primärwicklung 4, die Wicklung 6 sowie die Sekundärwicklung 7 sind als Folienwickel ausgeführt.

Aus der Fig. 1 ist ersichtlich, daß das Schaltnetzteil durch die Wicklung 6 und die Gewinnung aller erforderlichen Spannungen für das Bildwiedergabegerät aus Sekundärwicklungen des Transformators eine vollkommene Netztrennung aufweist.

ZT/P2-Wr/Az        16.05.84        -/-

K. Reh - J. P. Schultz 15-2

Der elektronische Schalter S kann aus einem Schalt- transistor oder einem Schalttransistor mit intergrierter antiparalleler Diode (dabei entfällt dann die Freilaufdiode D) oder einem abschaltbaren Thyristor bestehen. Um dieses in der Figur 1 anzudeuten, ist links vom Bezugs- zeichen S für den Schalter das Symbol eines NPN-Schalt- transistors eingezeichnet. Nachfolgend wird davon ausge- gangen, daß der Schalter S ein Schalttransistor ist, der von einem Steuerstrom $I_B$ gesteuert wird. Die Spannung am Schalttransistor ist mit $U_S$, und der Strom durch die Primärwicklung 4 ist mit $I_L$ bezeichnet.

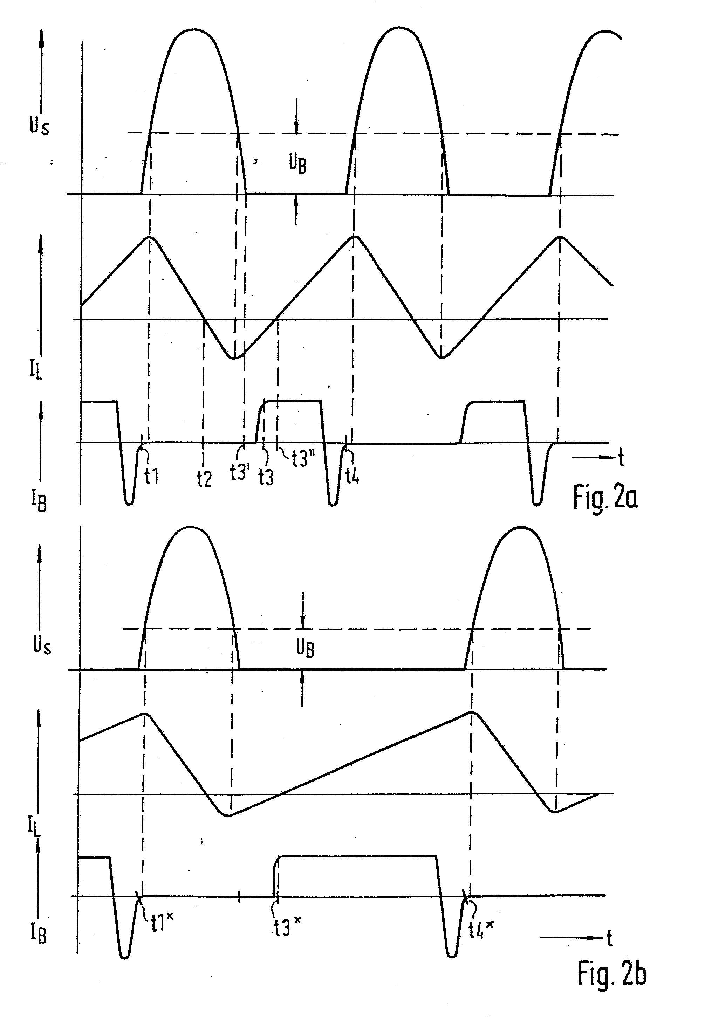

Anhand der in den Figuren 2a und 2b dargestellten zeit- lichen Verläufe der in der Figur 1 angegebenen Spannungen und Ströme wird die Arbeitsweise des Schaltnetzteiles nachstehend erläutert.

In Figur 2a ist die Funktion des Schaltnetzteiles bei normaler Netzwechselspannung $U_N$ dargestellt, woraus sich eine bestimmte Höhe der Betriebsspannung $U_B$ ergibt, die in die oberste Zeile der Figur 2a eingetragen ist. Zum Zeitpunkt t1 ist der Schalttransistor gesperrt. Weil die Primärwicklung 4 durch den Kondensator CA zu einem Schwingkreis ergänzt ist, bildet sich nun am Schalt- transistor eine halbe Schwingung der sinusförmigen Spannung $U_S$ aus, deren Frequenz sich aus den Werten dieses Schwingkreises bestimmt. Der Strom $I_L$ durch die Primärwicklung 4 nimmt dabei von seinem höchsten positiven Wert bis auf null ab (Zeitpunkt t2) und geht dann auf einen negativen Höchstwert zurück, den er erreicht hat, wenn der Betrag der Spannung $U_S$ gleich dem Betrag der

K. Reh - J. P. Schultz 15-2

Betriebsspannung $U_B$ ist. Zum Zeitpunkt t3 fließt ein ausreichend großer Steuerstrom $I_B$ , so daß der Schalttransistor wieder leitet. Spätestens wenn der Strom $I_L$ durch null geht, (t3" in Fig. 2a) muß der Schalttransistor wieder eingeschaltet sein. Günstiger ist es, wenn der Schalttransistor schon vorher eingeschaltet wird, da er dann noch keinen Strom führen muß. Der frühest mögliche Zeitpunkt zum Einschalten ist der Zeitpunkt, an dem die Spannung $U_S$ null wird (t3' in Fig. 2a). Der Strom $I_L$ steigt jetzt wieder linear auf seinen höchsten positiven Wert an. Beim Sperren des Schalttransistors zum Zeitpunkt t4 wiederholt sich dann der Vorgang wie beschrieben.

Da von der Sekundärwicklung 7 die Anzapfung b an Masse gelegt ist, ergibt sich für die Anzapfung a  gegenüber den Anzapfungen c bis g ein anderer Wicklungssinn der Sekundärwicklung 7. Infolge dessen wird durch den zu der Anzapfung a gehörenden Wicklungsteil durch die Gleichrichterschaltung Da, Ca  die Spannung $U_T$ während der Zeit gewonnen, in der der Strom $I_L$ von seinem negativen Höchstwert zu seinem positiven Höchstwert läuft. Mit den zu den Anzapfungen c bis g gehörenden Wicklungsteilen werden Spannungen in der Zeit gewonnen, in der der Strom $I_L$ von seinem positiven auf seinen negativen Höchstwert fällt. Auch mit der Diodensplitwicklung werden in der Zeit, in der der Strom $I_L$ abnimmt, die Focusspannung $U_F$ und die Hochspannung $U_{Hoch}$  gewonnen. In dieser Zeitspanne ist die Spannung $U_S$ größer als die Betriebsspannung $U_B$.

Die Höhe der mit der weiteren Wicklung 6 gewonnenen Spannung $U_R$ ist ein Maß für die an der Primärwicklung 4 anliegenden Betriebsspannung $U_B$, deren Höhe

K. Reh - J. P. Schultz 15-2

sich aus der Netzwechselspannung $U_N$ und der Last ergibt. Die Spannung $U_R$ wird daher zur Steuerung der Schaltfrequenz des Schalters S verwendet, damit konstante Spannungen an den Sekundärwicklungen entstehen.

In Figur 2b ist der Fall dargestellt, bei dem eine verringerte Netzwechselspannung $U_N$ dem Schaltnetzteil zugeführt wird. Entsprechend niedriger ist der Wert der Betriebsspannung $U_B$. Die nun auch niedriger ausfallende Spannung $U_R$ bewirkt, daß der Schalter S mit einer niedrigeren Schaltfrequenz betrieben wird. Dies ist aus dem größeren zeitlichen Abstand t1*, t3* und t4* im Diagramm des Steuerstromes $I_B$ ersichtlich. Durch die sich daraus ergebende längere Einschaltzeit des Schalters S wird erreicht, daß, trotz niedrigerer Betriebsspannung $U_B$, die in der Primärwicklung 4 gespeicherte magnetische Energie den gleichen Wert erreicht, wie bei normaler Betriebsspannung $U_B$. Dadurch bleiben die von den Sekundärwicklungen erzeugten Spannung U konstant. Durch die Transformation der Spannung $U_S$ auf die Sekundärseite des Transformators 3 wird die für die Betriebsspannung $U_B$ in den Verlauf der Spannung $U_S$ eingezeichnete Linie zur Nullinie für die sekundären Spannungen. Da der Betrag Spitzenwert der Spannung $U_S$ minus Betriebsspannung $U_B$ bei genügender magnetischer Ladung der Primärwicklung 4 immer konstant ist und diese Spannung immer die gleiche Frequenz hat, ergibt sich, daß die hieraus gewonnenen sekundären Spannungen auch konstant sind.

Standard Elektrik Lorenz
Aktiengesellschaft
Stuttgart

K. Reh - J. P. Schultz 15-2

Patentansprüche

1. Schaltnetzteil mit einem Transformator für ein Bildwiedergabegerät mit einer Bildröhre, bei dem der Transformator eine Primärwicklung in Reihe mit einer periodisch betätigten Schalteranordnung und einer Spannungsquelle, eine Sekundärwicklung zur Gewinnung der Hochspannung für die Bildröhre und wenigstens eine Sekundärwicklung zur Gewinnung weiterer Sekundärspannungen aufweist, d a d u r c h   g e k e n n z e i c h n e t , daß die Schalteranordnung aus einem Schalter (S) mit einer antiparallel geschalteten Freilaufdiode (D) besteht und die Primärwicklung (4) des Transformators (3) durch einen Kondensator (CA) zu einem Schwingkreis ergänzt ist, daß zur Gewinnung der Hochspannung ($U_{Hoch}$) eine Diodensplitwicklung (8) vorhanden ist, die einen Abgriff zur Entnahme einer Focusspannung ($U_F$) aufweist und das an die weiteren Sekundärwicklungen (7) Einweggleichrichterschaltungen (Da bis Dg, Ca bis Cg) zur Erzeugung der Sekundärspannungen angeschlossen sind.

ZT/P2-Wr/Az          16.05.84                    -/-

0163235

K. Reh - J. P. Schultz 15-2

2. Schaltnetzteil nach Anspruch 1, dadurch gekennzeichnet, daß der Kondensator (CR) durch die Parallelkapazität(en) der Primärwicklung (4) gebildet ist.

3. Schaltnetzteil nach Anspruch 1 oder 2, dadurch gekennzeichnet, daß der Schalter (S) aus einem Schalttransistor, einem Schalttransistor mit integrierter antiparalleler Diode bei Wegfall der Freilaufdiode (D) oder einem abschaltbaren Thyristor besteht.

4. Schaltnetzteil nach einem der vorhergehenden Ansprüche, dadurch gekennzeichnet, daß der Transformator (3) eine Sekundärwicklung (7c - 7b) zur Erzeugung der Heizspannung ($U_{Hei}$) für die Bildröhre aufweist.

5. Schaltnetzteil nach einem der vorhergehenden Ansprüche, dadurch gekennzeichnet, daß der Transformator (3) eine weitere Wicklung (6) aufweist, deren Spannung ($U_R$) zur Regelung der Sekundärspannungen auf einen konstanten Wert bei schwankender Betriebsspannung ($U_B$) oder wechselnder Last dient.

ZT/P2-Wr/Az          16.05.84          -/-

Fig.1

0163235

0163235

Fig. 2a

Fig. 2b

K. Reh 15-2
4. 6. 84